# EUROPEAN PATENT APPLICATION

(11) **EP 4 830 599 A1**
(43) Date of publication of application: **28.10.2026**
(21) Application number: 24917384.0
(22) Date of filing: 29.04.2024
(51) Int. Cl.: A47J 31/06, A47J 31/44, A47J 31/46

(54) **CAPSULE HOLDER ASSEMBLY**

(30) Priority: 08.01.2024 KR 20240002769
(71) Applicant: LG Electronics Inc., Yeongdeungpo-gu Seoul 07336 (KR)
(72) Inventor: LEE, Jaeduck, Seoul 08592 (KR); LIM, Hyoung Keun, Seoul 08592 (KR); PARK, Hyun Woo, Seoul 08592 (KR)
(74) Representative: Vossius & Partner Patentanwälte Rechtsanwälte mbB
(86) International application number: PCT/KR2024/005771
(87) International publication number: WO 2025/150623

(57) **Abstract**

The present invention provides a capsule holder assembly which can be selectively mounted to a home appliance so as to be employed, the assembly comprising: a holder mounting unit which is fixed around a water outlet of the home appliance; and a capsule holder which is mounted to the holder mounting unit and provides an accommodation space in which a capsule is accommodated. Therefore, beverages can be extracted from capsules by using a home appliance lacking an extraction function for beverage capsules.

## Description

The present disclosure relates to a new type of capsule holder assembly configured to extract a capsule beverage while being mounted to a home appliance having no capsule beverage extraction function.

A capsule in which a raw material for preparing a beverage is sealed and packaged has been widely used.

Such a capsule stores a raw material for a beverage therein in a sealed state, and a user can prepare a beverage by passing water through an interior of the capsule by using a mechanical device.

A representative example of a beverage apparatus using such a capsule is a coffee machine.

Recently, various technologies have been proposed that enable the capsule beverage to be extracted even in a general home appliance of each household (for example, a refrigerator or a water purifier). That is, a capsule beverage can be extracted by applying, to a home appliance, a capsule holder to which a capsule can be mounted.

Related technologies are disclosed in U.S. Patent Application Publication No. US 2020/0121122 A1, Korean Utility Model Application Publication No. 20-2011-0006316, Korean Patent Application Publication No. 10-2014-0038906, Korean Patent Application Publication No. 10-2015-0083335, and the like.

However, a home appliance having a capsule holder according to the above-described conventional technologies has a structure in which the capsule holder is not separately provided, but is integrally applied and provided when the home appliance is manufactured. That is, the capsule holder according to the conventional technologies could not be applied to an existing home appliance and was integrally provided only in a new home appliance. Accordingly, there has been a complaint that a consumer having an existing home appliance has no choice but to separately purchase a dedicated extraction machine in order to extract a capsule beverage.

In addition, according to the conventional technologies, an outlet through which a capsule beverage is dispensed and an outlet through which purified water or hot water is supplied were provided separately from each other. That is, conventionally, a separate outlet pipe for dispensing the capsule beverage was additionally provided.

Accordingly, the conventional home appliance has a disadvantage in that an extraction region for extracting a capsule beverage must be provided separately from a region for providing drinking water, and thus an overall product size inevitably increases. In addition, there is a disadvantage in that a separate hot water line and various valves for selectively supplying hot water to the corresponding line must be additionally provided.

In addition, a conventional structure for providing a capsule in order to extract a capsule beverage is configured such that the capsule is provided at a specific position in a drawer-like manner, or such that, after a user directly seats the capsule at a position at which the capsule can be seated, the capsule is perforated by closing a cover.

Accordingly, there is a disadvantage in that a structure for perforating the capsule must be separately provided in the home appliance, and thus the design of the overall structure of the home appliance or the arrangement of the components inevitably needs to be changed.

An objective of the present disclosure is to provide a capsule holder assembly capable of extracting a capsule beverage when applied even to an existing home appliance.

In addition, an objective of the present disclosure is to provide a capsule holder assembly capable of extracting a capsule beverage by using a nozzle through which hot water is supplied when the capsule holder assembly is applied to an existing home appliance.

In addition, an objective of the present disclosure is to provide a capsule holder assembly in which a capsule can be accurately perforated and accurately coupled at a correct position by a simple operation.

According to a capsule holder assembly of the present disclosure, the capsule holder assembly may include a holder mounting portion coupled to a home appliance, and a capsule holder mounted to the holder mounting portion and configured to seat a capsule.

According to the capsule holder assembly of the present disclosure, the holder mounting portion may be fixed around a water outlet of the home appliance.

According to the capsule holder assembly of the present disclosure, a protruding coupling portion may be formed on a bottom surface of the holder mounting portion.

According to the capsule holder assembly of the present disclosure, a dispensing nozzle for receiving drinking water discharged through the water outlet of the home appliance may be provided.

According to the capsule holder assembly of the present disclosure, the dispensing nozzle may be installed to pass through the holder mounting portion and to be exposed in an interior of the protruding coupling portion.

According to the capsule holder assembly of the present disclosure, the capsule holder may be formed to have an accommodation space in which a capsule is accommodated.

According to the capsule holder assembly of the present disclosure, a discharge port may be formed in the capsule holder to discharge an extracted beverage flowing down into the accommodation space.

According to the capsule holder assembly of the present disclosure, the discharge port of the capsule holder may be formed in a bottom surface of the capsule holder.

According to the capsule holder assembly of the present disclosure, the capsule holder assembly may further include a gripping cap for gripping and perforating the capsule when the capsule holder is coupled to the holder mounting portion and rotationally operated in a horizontal direction.

According to the capsule holder assembly of the present disclosure, the gripping cap may be installed to be accommodated in the accommodation space of the capsule holder and to surround the capsule.

According to the capsule holder assembly of the present disclosure, the dispensing nozzle may be formed to be coupled to an upper surface of the gripping cap.

According to the capsule holder assembly of the present disclosure, the dispensing nozzle may press the gripping cap when the capsule holder is coupled to the holder mounting portion and moved upward.

According to the capsule holder assembly of the present disclosure, the gripping cap may grip and perforate the capsule according to vertical movement of the capsule holder.

According to the capsule holder assembly of the present disclosure, the holder mounting portion may be provided with a pressing member for pressing the gripping cap when the capsule holder vertically moves.

According to the capsule holder assembly of the present disclosure, an inner circumferential surface of the protruding coupling portion and an outer circumferential surface of the dispensing nozzle may be formed to be spaced apart from each other.

According to the capsule holder assembly of the present disclosure, a coupling protrusion in which an end of the dispensing nozzle is accommodated may be formed on the upper surface of the gripping cap.

According to the capsule holder assembly of the present disclosure, the coupling protrusion may be positioned inside the protruding coupling portion, and the dispensing nozzle may be formed to be inserted into the coupling protrusion.

According to the capsule holder assembly of the present disclosure, the capsule holder may be vertically moved along an elevating groove formed in the protruding coupling portion.

According to the capsule holder assembly of the present disclosure, a guide protrusion may be formed on the capsule holder, the guide protrusion being inserted into the elevating groove and moved along the elevating groove by an operation of rotating the capsule holder in a horizontal direction.

According to the capsule holder assembly of the present disclosure, a handle may be provided on a circumferential surface of the capsule holder.

According to the capsule holder assembly of the present disclosure, the guide protrusion may be formed on an inner circumferential surface of the capsule holder so as to be located at a position corresponding to a side in a longitudinal direction of the handle.

According to the capsule holder assembly of the present disclosure, the elevating groove and the corresponding guide protrusion may respectively include a plurality of elevating grooves and a plurality of guide protrusions.

According to the capsule holder assembly of the present disclosure, the plurality of elevating grooves may be respectively formed at positions symmetrical to each other with respect to a central axis of the protruding coupling portion.

According to the capsule holder assembly of the present disclosure, a lower end of the elevating groove may be formed to be open to a bottom surface of the protruding coupling portion.

According to the capsule holder assembly of the present disclosure, a support on which the capsule is seated may be provided in the accommodation space.

According to the capsule holder assembly of the present disclosure, opposing surfaces between the support and the gripping cap may be formed to be engaged with each other.

According to the capsule holder assembly of the present disclosure, an accommodation groove may be formed in an upper surface of the support along a periphery of the upper surface, and an accommodation protrusion received in and engaged with the accommodation groove may be formed on a bottom surface of the gripping cap.

According to the capsule holder assembly of the present disclosure, an airtight member may be provided on the opposing surfaces between the gripping cap and the support.

According to the capsule holder assembly of the present disclosure, the airtight member may be formed to surround a lower end of the gripping cap and the accommodation protrusion.

According to the capsule holder assembly of the present disclosure, the airtight member may be formed to be in airtight contact with the accommodation groove of the support.

According to the capsule holder assembly of the present disclosure, the holder mounting portion may be provided with the pressing member for pressing the gripping cap.

According to the capsule holder assembly of the present disclosure, the pressing member may be positioned in the protruding coupling portion of the holder mounting portion.

According to the capsule holder assembly of the present disclosure, the pressing member may be detachably coupled to the inner circumferential surface of the protruding coupling portion.

According to the capsule holder assembly of the present disclosure, an engaging step may be formed on the inner circumferential surface of the protruding coupling portion, and an engaging hook selectively engaged with the engaging step may be formed on a circumferential surface of the pressing member.

According to the capsule holder assembly of the present disclosure, the pressing member may be formed to press a peripheral portion of the upper surface of the gripping cap.

According to the capsule holder assembly of the present disclosure, a restoring member for pushing the pressing member downward may be provided between the bottom surface of the holder mounting portion and the upper surface of the pressing member.

According to the capsule holder assembly of the present disclosure, the capsule holder may be provided with a structure for preventing residual water from falling through the discharge port.

According to the capsule holder assembly of the present disclosure, the structure for preventing residual water may include a residual water prevention portion detachable from the discharge port of the capsule holder.

According to the capsule holder assembly of the present disclosure, the capsule holder assembly may include an elevating guide coupled to the holder mounting portion and vertically moved from the holder mounting portion by the rotational operation in the horizontal direction, and the capsule holder may vertically move together with the elevating guide.

According to the capsule holder assembly of the present disclosure, the capsule holder may be installed to rotate the elevating guide by the rotational operation in the horizontal direction.

According to the capsule holder assembly of the present disclosure, the elevating guide may be installed to vertically move along the outer circumferential surface of the protruding coupling portion of the holder mounting portion when the capsule holder is rotationally operated.

According to the capsule holder assembly of the present disclosure, the elevating guide may be provided with a guide member having a guide protrusion to be moved along the elevating groove formed in the outer circumferential surface of the protruding coupling portion.

According to the capsule holder assembly of the present disclosure, the lower end of the elevating groove may be formed so as not to reach the bottom surface of the protruding coupling portion.

According to the capsule holder assembly of the present disclosure, the elevating guide and the capsule holder may be provided with a structure for allowing the elevating guide and the capsule holder to be coupled to each other at correct positions.

According to the capsule holder assembly of the present disclosure, a coupling protrusion may be formed on an outer surface of the elevating guide, and a coupling groove into which the coupling protrusion is inserted and coupled may be formed in the capsule holder.

According to the capsule holder assembly of the present disclosure, an extended rim may be formed on a periphery of an upper end of the capsule holder, and a fixed guide in which the extended rim is accommodated may be provided at a lower end of the elevating guide.

According to the capsule holder assembly of the present disclosure, the extended rim of the capsule holder may be coupled to a guide groove of the fixed guide in a drawer-like manner.

According to the capsule holder assembly of the present disclosure, the capsule holder may be coupled to the fixed guide in a drawer-like manner.

According to the capsule holder assembly of the present disclosure, stopper steps may be formed at opposite ends of the extended rim to restrict insertion of the extended rim into the guide groove of the fixed guide.

The capsule holder assembly of the present disclosure is not a structure integrally provided in a home appliance, but may be additionally coupled to and installed in an existing home appliance. Accordingly, even a home appliance without having a capsule beverage extraction function may have a capsule beverage extraction function by application of the capsule holder assembly of the present disclosure thereto.

In addition, since the capsule holder assembly of the present disclosure can be applied to an existing home appliance without changing a structure of the existing home appliance, a user may directly mount the capsule holder assembly thereto.

In addition, in the capsule holder assembly of the present disclosure, the holder mounting portion mounted to an existing home appliance may be provided as a single structure, and a beverage extraction nozzle may not be provided at a position separate from the water outlet of the home appliance. Accordingly, even when the capsule holder assembly is additionally installed, a size of a dispenser portion may not be changed. That is, a structural change of the existing home appliance may not be required.

In addition, in the capsule holder assembly of the present disclosure, structures for perforating and rupturing a capsule, securely gripping the capsule, and forming a sealed space may be all provided in the capsule holder. Accordingly, a structure of the holder mounting portion may be relatively simplified, and thus the holder mounting portion may be easily mounted to a home appliance.

### BRIEF DESCRIPTION OF THE DRAWINGS

FIG. 1 is a view illustrating a state in which a capsule holder assembly according to an embodiment of the present disclosure is applied to a dispenser portion of a door of a refrigerator.
FIG. 2 is a view illustrating a main portion of the capsule holder assembly in a state in which the capsule holder assembly according to the embodiment of the present disclosure is applied to the dispenser portion of the door of the refrigerator.
FIG. 3 is an exploded perspective view of the capsule holder assembly according to the embodiment of the present disclosure.
FIG. 4 is an exploded perspective view, as viewed from below, illustrating a state in which the holder mounting portion of the capsule holder assembly according to the embodiment of the present disclosure is coupled to an outlet cover of the dispenser portion.
FIG. 5 is a cross-sectional view of a main portion in a state in which the holder mounting portion of the capsule holder assembly according to the embodiment of the present disclosure is installed.
FIG. 6 is an exploded cross-sectional view of the capsule holder assembly according to the embodiment of the present disclosure.
FIG. 7 is a plan view of a state in which a gripping cap is installed in a capsule holder of the capsule holder assembly according to the embodiment of the present disclosure.
FIG. 8 is a cross-sectional view of a state in which the capsule holder is coupled to the holder mounting portion of the capsule holder assembly according to the embodiment of the present disclosure.
FIG. 9 is a state view of a main portion in a state in which the capsule holder is coupled to the holder mounting portion of the capsule holder assembly according to the embodiment of the present disclosure.
FIG. 10 is a state view of a main portion in a state in which the capsule holder is rotated with respect to the holder mounting portion of the capsule holder assembly according to the embodiment of the present disclosure.
FIG. 11 is a cross-sectional view of a state in which the capsule holder is completely coupled to the holder mounting portion of the capsule holder assembly according to the embodiment of the present disclosure.
FIG. 12 is an exemplary view of a state in which a hot water supply module is provided for extracting a beverage by using the capsule holder assembly according to the embodiment of the present disclosure.
FIG. 13 illustrates an example of an internal structure of the hot water supply module for extracting a beverage by using the capsule holder assembly according to the embodiment of the present disclosure.
FIG. 14 is a perspective view of an example of a state in which a residual water prevention portion is installed in the capsule holder assembly according to the embodiment of the present disclosure.
FIG. 15 is a cross-sectional view of the example of a state in which the residual water prevention portion is installed in the capsule holder assembly according to the embodiment of the present disclosure.
FIGS. 16 and 17 are cross-sectional views of another example of the state in which the residual water prevention portion is installed in the capsule holder assembly according to the embodiment of the present disclosure.
FIG. 18 is an exploded perspective view of still another example of a state in which the residual water prevention portion is installed in the capsule holder assembly according to the embodiment of the present disclosure.
FIG. 19 is an assembled perspective view of still another example of a state in which the residual water prevention portion is installed in the capsule holder assembly according to the embodiment of the present disclosure.
FIG. 20 is a cross-sectional view of still another example of a state in which the residual water prevention portion is installed in the capsule holder assembly according to the embodiment of the present disclosure.
FIG. 21 is a perspective view of an example of a storage case for storing the capsule holder assembly according to the embodiment of the present disclosure.
FIGS. 22 and 23 are cross-sectional views of a state in which an extension pipe for preventing splashing of a beverage is installed in the capsule holder assembly according to the embodiment of the present disclosure.
FIG. 24 is an exploded perspective view of a capsule holder assembly according to another embodiment of the present disclosure.
FIGS. 25 and 26 are perspective views of a main portion in a state in which the capsule holder assembly according to another embodiment of the present disclosure is coupled to a capsule holder.
FIG. 27 is a cross-sectional view of the capsule holder of the capsule holder assembly according to another embodiment of the present disclosure.
FIGS. 28 and 29 are cross-sectional views of a state in which the capsule holder is coupled to the holder mounting portion of the capsule holder assembly according to another embodiment of the present disclosure.
FIG. 30 is an exploded perspective view, as viewed from below, illustrating a state in which the holder mounting portion of the capsule holder assembly according to another embodiment of the present disclosure is coupled to the outlet cover of the dispenser portion.
FIG. 31 is an exploded view of a capsule holder of a capsule holder assembly according to still another embodiment of the present disclosure.

### DETAILED DESCRIPTION

Prior to describing embodiments of the present disclosure, when adding reference numerals to components in each drawing, it should be noted that identical components are given the same reference numerals as much as possible even if they are shown in different drawings.

In addition, when describing the embodiments of the present disclosure, if a detailed description of the relevant known configuration or function is judged to hinder understanding of the embodiments of the present disclosure, detailed descriptions thereof will be omitted.

In addition, in describing the components of the embodiments of the present disclosure, terms such as first, second, A, B, (a), and (b) may be used. These terms are only for distinguishing the components from other components, and the nature or order of the components is not limited by the terms. When a component is described as being "connected" or "coupled" to another component, the component may be directly connected to or coupled to the another component, but it should be understood that still another component may be "connected" or "coupled" thereto between each component.

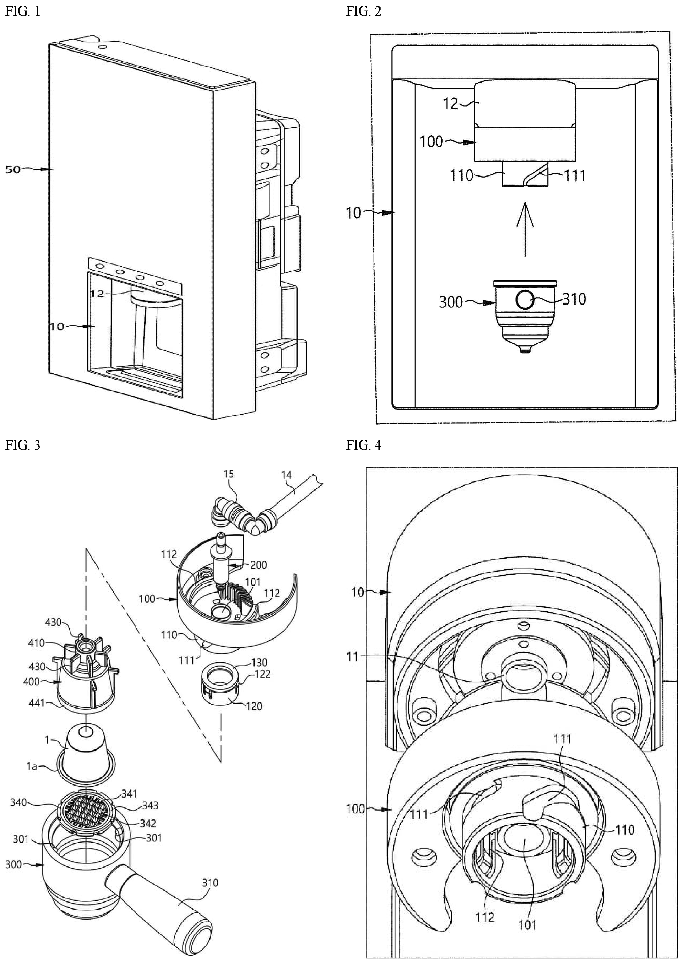

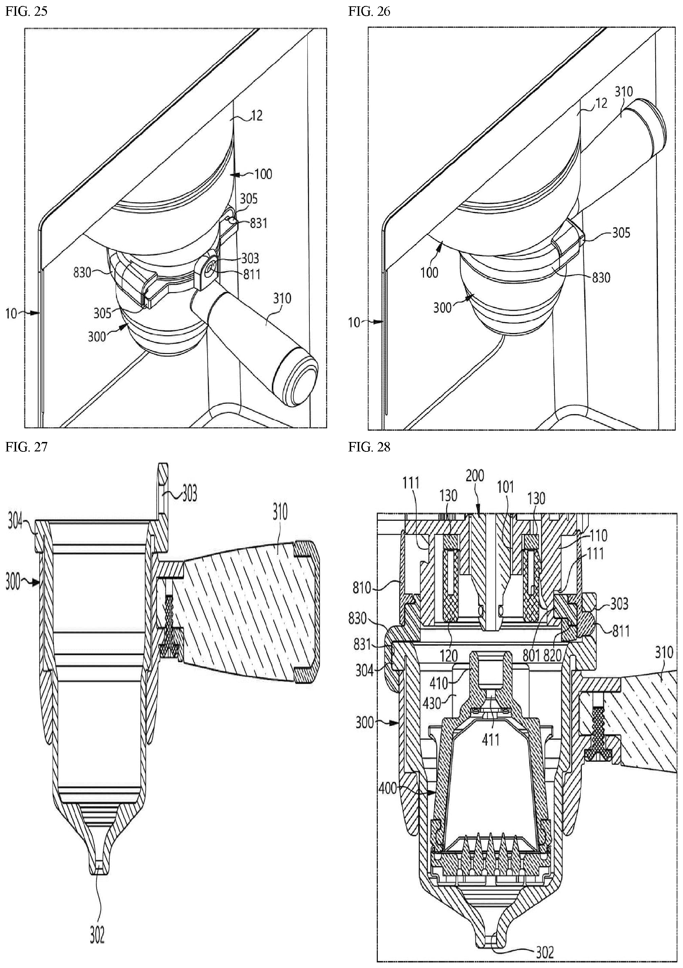

Hereinafter, preferred embodiments of a capsule holder assembly of the present disclosure will be described with reference to FIGS. 1 to 31.

Accompanying FIG. 1 is a view illustrating a state in which a capsule holder assembly according to an embodiment of the present disclosure is applied to a dispenser portion of a door of a refrigerator, and FIG. 2 is a view illustrating a main portion in a state in which the capsule holder assembly according to the embodiment of the present disclosure is applied to the dispenser portion of the door of the refrigerator.

In addition, FIG. 3 is an exploded perspective view of the capsule holder assembly according to the embodiment of the present disclosure, and FIG. 4 is an exploded perspective view, as viewed from below, illustrating a state in which the holder mounting portion of the capsule holder assembly according to the embodiment of the present disclosure is coupled to an outlet cover of the dispenser portion.

As illustrated in these drawings, the capsule holder assembly according to the embodiment of the present disclosure may be selectively mounted to and used with a home appliance. Accordingly, extraction of a capsule beverage is enabled even with a home appliance that does not have a capsule beverage extraction function.

The capsule holder assembly according to the embodiment of the present disclosure will be described in more detail for each component as follows.

First, the capsule holder assembly according to the embodiment of the present disclosure (hereinafter referred to as a "holder assembly") may include a holder mounting portion (100).

The holder mounting portion (100) may be used for operation of a capsule holder (300) to be described later while being coupled to a home appliance.

As illustrated in FIGS. 2, 4, and 5, the holder mounting portion (100) may be fixed to a portion through which drinking water is discharged from the home appliance. For example, when the home appliance is a refrigerator, the holder mounting portion (100) may be installed to be fixed around a water outlet (11) of a dispenser portion (10) provided in a door (50) of the refrigerator. In this case, the water outlet (11) may be formed as a hole or a pipe through which drinking water passes.

More specifically, the dispenser portion (10) may be provided with an outlet cover (12) around the water outlet (11) to protect the water outlet (11).

The holder mounting portion (100) may be coupled and fixed to the outlet cover (12) of the dispenser portion (10). In this case, the holder mounting portion (100) may be formed in a shape surrounding a circumferential surface and a bottom surface of the outlet cover (12), and may be fixed to the outlet cover (12) by screw coupling.

For example, it is preferable that the outlet cover (12) of the dispenser portion (10) be provided with a fastening hole (12a) when the outlet cover (12) is manufactured, so that the holder mounting portion (100) can be fastened thereto. Accordingly, even when a capsule beverage extraction function is not included in the refrigerator, a user may later directly purchase the holder assembly and couple the holder assembly to the outlet cover (12) of the dispenser portion (10).

The holder mounting portion (100) and the outlet cover (12) may be coupled to each other by adhesive, an adhesive tape, or hook coupling.

Meanwhile, a through hole (101) may be formed in the holder mounting portion (100). The through hole (101) may be formed to vertically penetrate the holder mounting portion (100) and be positioned to correspond to the water outlet (11).

The through hole (101) may not be positioned at the center of the holder mounting portion (100). That is, the water outlet (11) may be positioned on a front side of a bottom surface of the outlet cover (12), and an ice duct through which ice is discharged may be provided on a rear side of the water outlet (11) on the bottom surface of the outlet cover (12). In this case, the through hole (101) of the holder mounting portion (100) may also be eccentrically positioned to correspond to the water outlet (11) of the outlet cover (12).

The holder mounting portion (100) may be provided with a protruding coupling portion (110) to which the capsule holder (300) is coupled.

The protruding coupling portion (110) may be integrally formed with the holder mounting portion (100).

Specifically, the protruding coupling portion (110) may protrude downward from the bottom surface of the holder mounting portion (100) and may be formed to have a hollow pipe structure.

The protruding coupling portion (110) may be positioned at a portion of the bottom surface of the holder mounting portion (100) in which the through hole (101) is formed. That is, the protruding coupling portion (110) may be formed to protrude downward from a portion around the through hole (101). Accordingly, an internal space of the protruding coupling portion (110) may be in communication with the through hole (101).

An elevating groove (111) may be formed in the outer circumferential surface of the protruding coupling portion (110). The elevating groove (111) may be a structure provided for vertical movement of the capsule holder (300).

The elevating groove (111) may be formed to have a spiral structure that is gradually inclined upward in a rotation direction of the capsule holder (300). Accordingly, the capsule holder (300) may be moved upward or downward along the elevating groove.

The elevating groove (111) may include a plurality of elevating grooves. In this case, the elevating grooves (111) may be respectively formed at positions symmetrical to each other with respect to an axial center of the protruding coupling portion (110).

A lower end of the elevating groove (111) may be formed to be open to the bottom surface of the protruding coupling portion (110). Accordingly, after an accommodation protrusion of the capsule holder (300) is inserted into the elevating groove (111) from the lower portion of the protruding coupling portion (110), the accommodation protrusion may be moved upward along the elevating groove (111) by an operation of turning the capsule holder (300), thereby moving the capsule holder (300) upward.

In addition, a pressing member (120) for pressing a gripping cap (400) to be described later may be provided in the protruding coupling portion (110) of the holder mounting portion (100).

The pressing member (120) may be positioned to press a periphery of an upper surface of the gripping cap (400), and may be formed as a ring-shaped block having a hollow interior and a predetermined height so that a dispensing nozzle passing through the through hole of the holder mounting portion (100) can be positioned therein.

The pressing member (120) may be coupled to the inside of the protruding coupling portion (110). To this end, an engaging step (112) may be formed on an inner circumferential surface of the protruding coupling portion (110), and an engaging hook (122) selectively engaged with the engaging step (112) may be formed on an outer circumferential surface of the pressing member (120).

In addition the pressing member (120) may be configured to elastically move upward and downward so as to push the gripping cap (400) downward when a pressing force is released. By such a structure, it is possible to prevent a problem in which the gripping cap (400) is not smoothly separated due to a dispensing nozzle (200), which will be described below, being retained by the gripping cap (400).

In order to allow the pressing member (120) to elastically move, a restoring member (130) may be provided between the bottom surface of the holder mounting portion (100) and the upper surface of the pressing member (120). That is, the pressing member (120) may be pushed downward by the restoring member (130). In this case, the restoring member (130) may be, for example, an elastically restorable ring-shaped washer such as a spring washer or a wave washer.

Next, the capsule holder assembly according to the embodiment of the present disclosure may include the dispensing nozzle (200).

The dispensing nozzle (200) may be a nozzle for guiding drinking water, which is provided to pass through the water outlet of the refrigerator (home appliance), so that the drinking water is supplied in an airtight manner into the gripping cap (400) to be described later.

As illustrated in FIG. 3, the dispensing nozzle (200) may be installed to pass through the through hole (101) of the holder mounting portion (100) while being connected to a guide pipe (14) that guides drinking water to be discharged to the water outlet (11) of the home appliance. In this case, the dispensing nozzle (200) and the guide pipe (14) may be directly connected to each other or may be connected to each other by using a separate connector (fitting) (15).

In addition, the dispensing nozzle (200) may be installed to pass through the water outlet (11) of the home appliance.

Although not shown, when the water outlet (11) has a structure in which the water outlet (11) is formed as a separate pipe structure and coupled to the outlet cover (12), the water outlet (11) may be removed, and the dispensing nozzle (200) may be installed at a portion where the water outlet (11) is installed, thereby replacing the water outlet (11).

The dispensing nozzle (200) may be installed to an extent that the dispensing nozzle (200) passes through the through hole (101) of the holder mounting portion (100) and can be exposed in the interior of the protruding coupling portion (110) of the holder mounting portion (100).

Next, the capsule holder assembly according to the embodiment of the present disclosure may include the capsule holder (300).

The capsule holder (300) may be defined as a device or assembly in which the capsule (1) is accommodated and from which a beverage is extracted from the capsule (1).

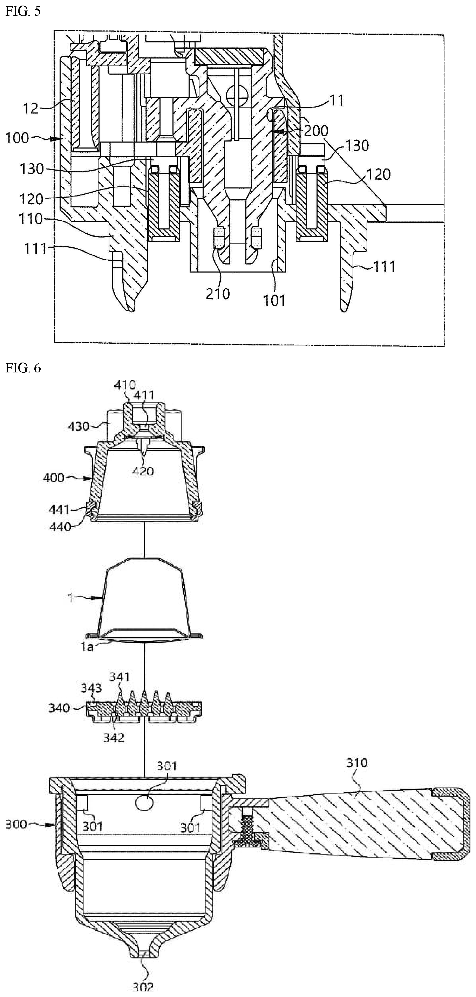

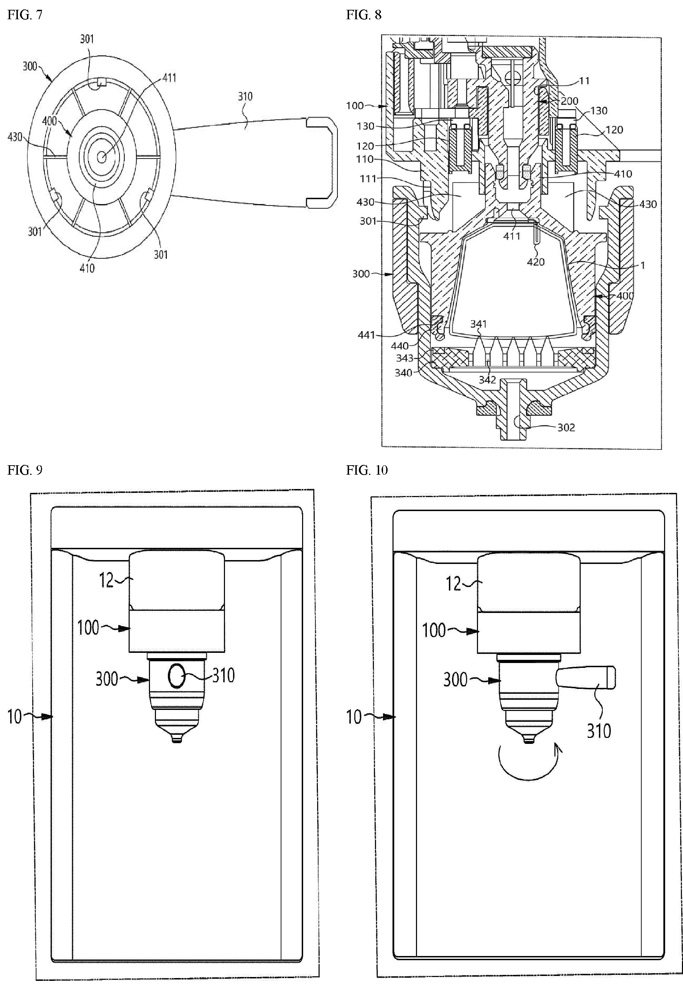

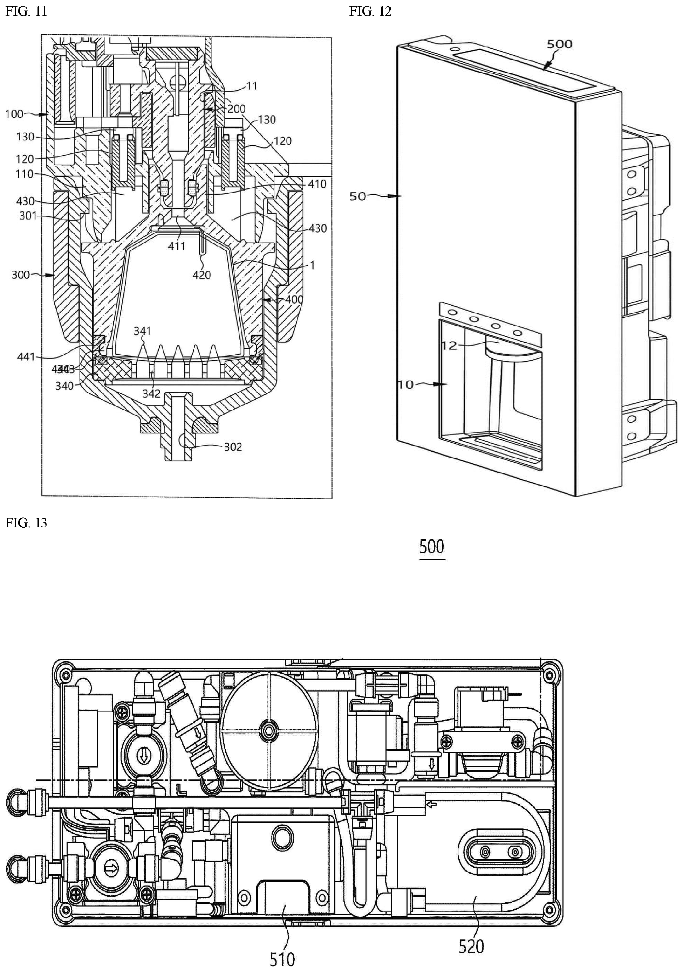

FIG. 6 is an exploded cross-sectional view of the capsule holder assembly according to the embodiment of the present disclosure, FIG. 7 is a plan view of a state in which the gripping cap is installed in the capsule holder of the capsule holder assembly according to the embodiment of the present disclosure, and FIGS. 8 and 11 are cross-sectional views of a state in which the capsule holder is coupled to the holder mounting portion of the capsule holder assembly according to the embodiment of the present disclosure.

As shown in these drawings, the capsule holder (300) may be formed to provide an accommodation space in which the capsule (1) is accommodated. The accommodation space may be formed to be open upward, so that the capsule (1) may be accommodated therein from the open upper side.

In addition, the protruding coupling portion (110) of the holder mounting portion (100) may be additionally accommodated in the accommodation space. That is, the capsule (1) may be accommodated in a lower portion in the accommodation space, and the protruding coupling portion (110) may be positioned in an upper portion in the accommodation space.

The capsule holder (300) may be provided with a guide protrusion (301) moved along the elevating groove (111) formed in the protruding coupling portion (110) of the holder mounting portion (100). The guide protrusion (301) may be formed to protrude in a radial direction from an inner circumferential surface of the accommodation space provided by the capsule holder (300). Accordingly, while the protruding coupling portion (110) is being accommodated in the accommodation space of the capsule holder (300), the guide protrusion (301) may be received in the elevating groove (111), and, in this state, by rotating the capsule holder (300), the guide protrusion (301) may be moved upward along the elevating groove (111), thereby moving the capsule holder (300) upward.

A discharge port (302) for discharging a beverage extracted from the accommodation space may be formed in the bottom surface of the capsule holder (300). An inner bottom surface of the accommodation space may be preferably formed to be gradually inclined downward toward a location where the discharge port (302) is positioned.

Meanwhile, a handle (310) may be provided on the circumferential surface of the capsule holder (300). Accordingly, the capsule holder (300) may be easily rotated by operation of the handle (310).

In particular, the handle (310) may be preferably formed such that a position on a side in a longitudinal direction of the handle (310) corresponds to a position of the guide protrusion (301) formed on the inner circumferential surface of the capsule holder (300). Accordingly, the position of the guide protrusion (301) may be accurately recognized on the basis of the position of the handle (310), and thus the guide protrusion (301) may be accurately aligned with the elevating groove (111) even though the guide protrusion (301) is formed inside the capsule holder (300).

In addition, a support (340) on which the capsule (1) is seated may be provided in the accommodation space of the capsule holder (300). The support (340) may be provided to rupture a film (1a) sealing the capsule (1) while maintaining a state in which the capsule (1) is seated at a correct position. In this case, the capsule (1) may be provided such that the film (1a) is placed on the upper surface of the support (340).

A rupture protrusion (341) may be formed to protrude from the upper surface of the support (340). The rupture protrusion (341) may be provided to rupture the film (1a) of the capsule (1) placed on the upper surface of the support (340). The rupture protrusion (341) may be formed to have a pointed structure toward an upper side.

In addition, multiple extraction holes (342) passing through the support (340) in an up-down direction may be formed in the support (340). The extraction holes (342) may be provided to guide an extracted beverage flowing out from the capsule (1) so that the extracted beverage may flow down to the inner bottom surface of the accommodation space of the capsule holder (300).

To this end, the bottom surface of the support (340) may be disposed to be spaced apart from the inner bottom surface of the accommodation space, so that a space through which the beverage may flow may be provided therebetween.

The support (340) may be preferably formed so as not to rotate leftward or rightward in a state in which the support (340) is seated in the accommodation space of the capsule holder (300).

As an example, although not shown, at least portions of the inner surface of the accommodation space and the outer surface of the support (340) may be formed as flat surfaces that engage with each other.

As another example, although not shown, protrusions and grooves that engage with each other may be formed on the inner surface of the accommodation space and the outer surface of the support (340).

Next, the capsule holder assembly according to the embodiment of the present disclosure may include the gripping cap (400).

The gripping cap (400) may be a component provided to grip and perforate the capsule (1).

As shown in FIGS. 3 and 6 to 8, the gripping cap (400) may be accommodated in the accommodation space of the capsule holder (300) and may be formed to have a cap structure surrounding the capsule (1) in the accommodation space.

An inner surface of the gripping cap (400) may be formed to correspond to an outer surface of the capsule (1) and to be in close contact with the outer surface of the capsule (1). In this case, an inner upper surface of the gripping cap (400) may be formed to be spaced apart from the capsule (1). Drinking water for extraction may be supplied to a space defined by such a spaced portion.

The dispensing nozzle (200) may be coupled to the upper surface of the gripping cap (400). To this end, a coupling protrusion (410) for coupling the gripping cap (400) to the dispensing nozzle (200) may be formed on the upper surface of the gripping cap (400).

The coupling protrusion (410) may be formed such that an end of the dispensing nozzle (200) is accommodated and communicates with the inside of the gripping cap (400). In this case, a portion in the coupling protrusion (410), in which the dispensing nozzle (200) is accommodated and coupled, may be formed to communicate with the internal space of the gripping cap (400) through a communication hole (411).

The coupling protrusion (410) may be formed at a center of the upper surface of the gripping cap (400). Accordingly, drinking water sprayed from the dispensing nozzle (200) may be supplied to an upper center inside the gripping cap (400) through the coupling protrusion (410).

In addition, one or two or more perforation protrusions (420) for perforating the capsule (1) may be formed on the inner upper surface of the gripping cap (400). The perforation protrusions (420) may be provided at a peripheral portion of the communication hole (411) communicating the coupling protrusion (410) with the space inside the gripping cap (400) among portions of the inner upper surface of the gripping cap (400).

A support rib (430) may be formed on the upper surface of the gripping cap (400), the support rib (430) being provided as a portion pressed by the pressing member (230) while preventing damage to the coupling protrusion (410). The support rib (430) may be formed along a radial direction around the coupling protrusion (410) and prevent bending deformation of the coupling protrusion (410).

In particular, the support rib (430) may be formed to be pressed by the pressing member (120) installed in the holder mounting portion (100). That is, when the capsule holder (300) is moved upward in a state in which the capsule holder (300) is mounted to the holder mounting portion (100), the bottom surface of the pressing member (120) may press the upper surface of the support rib (430), so that the perforation protrusions (420) of the gripping cap (400) may perforate the outer surface of the capsule (1). Of course, although not shown, the pressing member (120) may be configured to press the upper surface of the gripping cap (400) instead of the support rib (430).

Meanwhile, while drinking water is supplied through the coupling protrusion (410) of the gripping cap (400), the inside of the gripping cap (400) may be required to be in a high-pressure state. That is, considering that extraction pressure may be provided as an important factor for the taste of a beverage extracted from the capsule (1), it is preferable to prevent pressure leakage.

In order to prevent pressure leakage during such beverage extraction, an airtight ring (210) may be provided on at least one of an outer circumferential surface of the dispensing nozzle (200) or an inner circumferential surface of the coupling protrusion (410). That is, when the end of the dispensing nozzle (200) is inserted into the coupling protrusion (410), a coupled portion therebetween may be in an airtight state by the airtight ring (210).

In addition, in order to prevent pressure leakage during the beverage extraction, opposing surfaces between the support (340) and the gripping cap (400) may be formed to engage with each other.

For example, an accommodation groove (343) may be formed in the upper surface of the support (340) along a periphery of the upper surface, and an accommodation protrusion (440) received in and engaged with the accommodation groove (343) may be formed on the bottom surface of the gripping cap (400). In particular, the gripping cap (400) may be provided with an airtight member (441) formed to surround a lower end of the gripping cap (400) and the accommodation protrusion (440) and configured to be in airtight contact with the accommodation groove (343) of the support (340).

In the following, a process in which the holder mounting portion (100) of the holder assembly according to the above-described embodiment of the present disclosure is mounted to a home appliance will be described.

First, when the holder assembly according to the embodiment of the present disclosure is to be applied to a home appliance, the holder mounting portion (100) may be prepared. In this case, the holder mounting portion (100) may be provided in a state in which the pressing member (120) is coupled in the protruding coupling portion (110), and in a state in which the dispensing nozzle (200) is installed in the through hole of the protruding coupling portion (110). In this case, the dispensing nozzle (200) may be fixed in a state in which the dispensing nozzle (200) passes through the through hole (101) and a portion thereof is exposed in the protruding coupling portion (110).

Then, the prepared holder mounting portion (100) may be coupled to a portion of the home appliance at which the water outlet (11) is provided.

For example, the holder mounting portion (100) may be coupled to the outlet cover (12) provided in the dispenser portion (10) of a refrigerator. In this case, the holder mounting portion (100) may be coupled to the outlet cover (12) by screw fastening, adhesive, or an adhesive tape.

When the holder mounting portion (100) is coupled to the outlet cover (12), the holder mounting portion (100) may be installed such that the dispensing nozzle (200) passes through the water outlet (11) of the dispenser portion. When the water outlet (11) is formed as a pipe structure and interferes with the dispensing nozzle (200), the water outlet (11) may be separated from and removed from the outlet cover (12).

In addition, the dispensing nozzle (200) may be connected to the guide pipe (14) that supplies drinking water to the water outlet (11).

Accordingly, by coupling the holder mounting portion (100), the corresponding home appliance may be put into a state in which a capsule beverage can be extracted. This is illustrated in FIG. 5.

Next, a process of extracting a capsule beverage by using the holder mounting portion (100) coupled to the home appliance will be described.

First, a beverage capsule (1) from which a beverage is to be extracted may be mounted in the accommodation space of the capsule holder (300). In this case, the beverage capsule (1) may be inserted into the accommodation space of the capsule holder (300) in a state in which a portion thereof sealed with a film (1a) faces downward. Accordingly, the film (1a) of the beverage capsule (1) may be placed on the upper surface of the support (340) provided in the accommodation space.

When the mounting of the capsule is completed, the gripping cap (400) may be mounted. In this case, the gripping cap (400) may be mounted to cover the capsule (1) seated on the capsule holder (300). Accordingly, the coupling protrusion (410) formed on the outer surface of the gripping cap (400) may be positioned to protrude upward.

Next, the capsule holder (300) in which the capsule (1) and the gripping cap (400) are mounted may be positioned below the protruding coupling portion (110) of the holder mounting portion (100).

The capsule holder (300) may be positioned such that the guide protrusion (301) formed on the inner circumferential surface thereof is positioned directly below the elevating groove (111) formed in the protruding coupling portion (110) of the holder mounting portion (100). In this case, considering that the guide protrusion (301) is positioned in the axial direction of the handle (310) for gripping the capsule holder (300), the guide protrusion (301) and the elevating groove (111) may be positioned to be vertically aligned with each other on the basis of the axial-direction position of the handle (310). This is illustrated in FIG. 2.

Thereafter, the capsule holder (300) may be moved upward. Accordingly, the protruding coupling portion (110) of the holder mounting portion (100) may be accommodated in the accommodation space of the capsule holder (300), and the guide protrusion of the capsule holder (300) may be accommodated in the elevating groove (111) of the protruding coupling portion (110). This is illustrated in FIG. 9.

Subsequently, in a state in which the capsule holder (300) is coupled to the holder mounting portion (100), the handle (310) may be operated to rotate the capsule holder (300) in a horizontal direction as illustrated in FIG. 10.

When the capsule holder (300) is rotated in the horizontal direction by the operation of the handle (310), the guide protrusion (301) of the capsule holder (300) may be guided by the elevating groove (111) formed in the protruding coupling portion (110) and gradually moved upward, thereby rotating the capsule holder (300) and moving the capsule holder (300) upward with respect to the protruding coupling portion (110).

Then, by the rotation and upward movement of the capsule holder (300), the end of the dispensing nozzle (200) may be gradually inserted into the coupling protrusion (410) formed at the center of the upper surface of the gripping cap (400).

At the same time, by the rotation and upward movement of the capsule holder (300), the support rib (430) formed around the upper surface of the gripping cap (400) may receive a pressing force of the pressing member (120) installed in the protruding coupling portion (110) of the holder mounting portion (100) and may be pressed downward. Accordingly, the outer surface of the capsule (1) may be gradually brought into close contact with the inner surface of the gripping cap (400), and in this process, the perforation protrusions (420) in the gripping cap (400) may perforate the outer surface of the capsule (1). In addition, the rupture protrusion (341) formed on the upper surface of the support (340) may rupture the film (1a) of the capsule (1).

Then, when the capsule holder (300) is completely moved upward with respect to the coupling protrusion (410), the accommodation protrusion (440) formed on the bottom surface of the gripping cap (400) may be accommodated in the accommodation groove (343) formed on the upper surface of the support (340) and maintained in airtight contact therewith by the airtight member (441). In this case, the dispensing nozzle (200) may be completely inserted into the coupling protrusion (410) of the gripping cap (400) and maintained in airtight contact therewith by the airtight ring (210). This is shown in FIG. 11.

Then, in a state in which the coupling of the capsule holder (300) is completed, a cup may be provided in the dispenser portion (10). In this case, the cup may be positioned directly below the discharge port (302) of the capsule holder (300). Of course, the cup may be provided in the dispenser portion (10) before the capsule holder (300) is mounted to the holder mounting portion (100).

Then, after the cup is provided, when an operation for supplying drinking water for beverage extraction occurs (for example, operation of an operation button), the drinking water may be supplied to the dispensing nozzle (200) along the guide pipe (14).

Subsequently, after passing through the dispensing nozzle (200), the drinking water may be supplied into the gripping cap (400) through the communication hole (411) in the coupling protrusion (410) coupled thereto. In this case, since the inside of the gripping cap (400) is sealed from an external environment, the drinking water supplied into the gripping cap (400) may flow into the capsule (1) through a perforated portion of the capsule (1) in the gripping cap (400). Accordingly, a raw material stored in the capsule (1) may be extracted by the drinking water.

Then, the extracted beverage may pass through the ruptured film (1a) of the capsule (1) and also pass through the multiple extraction holes (342) formed in the support (340), flow down to a bottom surface inside the capsule holder (300), and then pass through the discharge port (302) and fall, thereby being received in the cup placed in the dispenser portion (10).

After the extraction of the capsule beverage is completed, the capsule holder (300) may be rotated in a direction opposite to the coupling direction. Accordingly, the guide protrusion (301) of the capsule holder (300) may be rotated along the elevating groove (111) formed in the protruding coupling portion (110) of the holder mounting portion (100), thereby gradually moving the capsule holder (300) downward.

In addition, while the capsule holder (300) is moved downward, the pressing member (120) in the protruding coupling portion (110) may push the gripping cap (400) coupled to the dispensing nozzle (200) by a restoring force of the restoring member (130).

Accordingly, a problem in which the gripping cap (400) is not separated from the dispensing nozzle (200) may be prevented, and the gripping cap (400) and the capsule holder (300) may be separated together from the holder mounting portion (100).

Thereafter, when the capsule holder (300) is separated, the gripping cap (400) may be separated from the inside of the capsule holder (300). Accordingly, the capsule in the capsule holder (300) may be in a removable state, and the user may remove the capsule from the capsule holder (300).

Meanwhile, when a user wants to receive hot water or purified drinking water without extracting a capsule beverage, the water purifier may be used with the capsule holder (300) separated from the holder mounting portion (100).

Of course, the water purifier may also be used with the capsule holder (300) coupled to the holder mounting portion (100) in a state in which no capsule is provided in the capsule holder (300).

As described above, the capsule holder assembly of the present disclosure may not be a structure integrally provided in a home appliance, but may be additionally coupled to and installed in an existing home appliance. Accordingly, even a home appliance that does not have a capsule beverage extraction function may have a capsule beverage extraction function by application of the capsule holder assembly of the present disclosure.

In addition, since the capsule holder assembly of the present disclosure can be applied to an existing home appliance without changing a structure of the existing home appliance, a user may directly mount the capsule holder assembly thereto.

In addition, in the capsule holder assembly of the present disclosure, the holder mounting portion (100) mounted to an existing home appliance may be provided as a single structure, and a beverage extraction nozzle may not be provided at a position separate from the water outlet (11) of the home appliance. Accordingly, even when the capsule holder assembly is additionally installed, a size of the dispenser portion (10) may not be changed. That is, a structural change of the existing home appliance may not be required.

In addition, in the capsule holder assembly of the present disclosure, structures for perforating and rupturing the capsule (1), securely gripping the capsule (1), and forming a sealed space may be all provided in the capsule holder (300). Accordingly, the structure of the holder mounting portion (100) may be relatively simplified, and thus the holder mounting portion (100) may be easily mounted to the home appliance.

Meanwhile, various modules or devices not mentioned in the above-described embodiment may be added to the capsule holder assembly of the present disclosure.

As an example, the capsule holder assembly of the present disclosure may further include a hot water supply module (500).

That is, when a structure for supplying hot water or a structure for supplying drinking water at high pressure is not provided in an existing home appliance, the separate hot water supply module (500) capable of supplying high-temperature and high-pressure hot water may be additionally provided in the home appliance.

In this case, as illustrated in FIG. 13, the hot water supply module (500) may include a water pump (510) and a heater (520) that receive, pump, and heat drinking water supplied from the corresponding home appliance. That is, by additionally providing the hot water supply module (500) having the water pump (510) and the heater (520), drinking water having a set temperature and pressure may be supplied, and thus capsule beverages may be extracted in a more diverse manner.

In addition, the hot water supply module (500) may be provided in a surplus portion of the home appliance. For example, in the case of a refrigerator, as illustrated in FIG. 12, the hot water supply module (500) may be provided on the upper surface of the door (50) of the refrigerator. Although not shown, the hot water supply module (500) may be provided on an upper surface of a refrigerator body.

As another example, a residual water prevention portion (600) may be additionally provided in the capsule holder assembly of the present disclosure in order to prevent a problem in which residual water in the capsule holder (300) flows down.

The residual water prevention portion (600) may be detachably provided on the bottom surface of the capsule holder (300), thereby preventing residual water flowing down through the discharge port (302) of the capsule holder (300) from falling. For coupling of the residual water prevention portion (600), a portion of the bottom surface of the capsule holder (300) in which the discharge port (302) is formed may be formed as a nozzle structure that can be inserted into the residual water prevention portion (600).

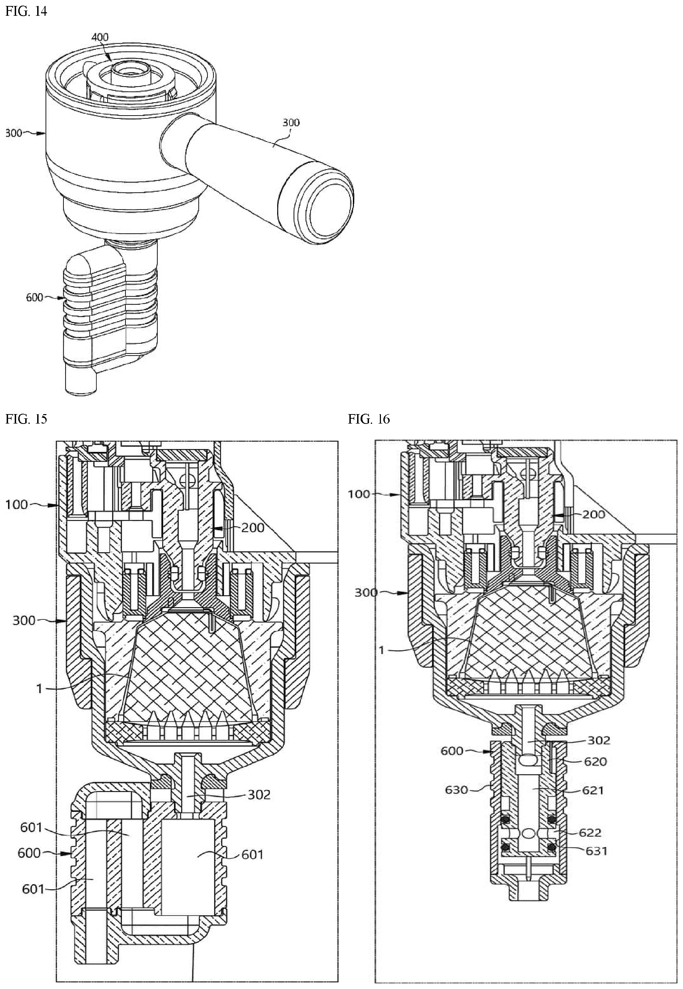

The residual water prevention portion (600) may be formed as a pipe structure having a space in which residual water is stored. For example, as illustrated in FIGS. 14 and 15, the residual water prevention portion (600) may be formed as a pipe structure having a flow path (601) bent to alternately extend upward and downward in a repeated manner. Accordingly, the residual water may be stored in the flow path (601) and may be prevented from undesirably falling.

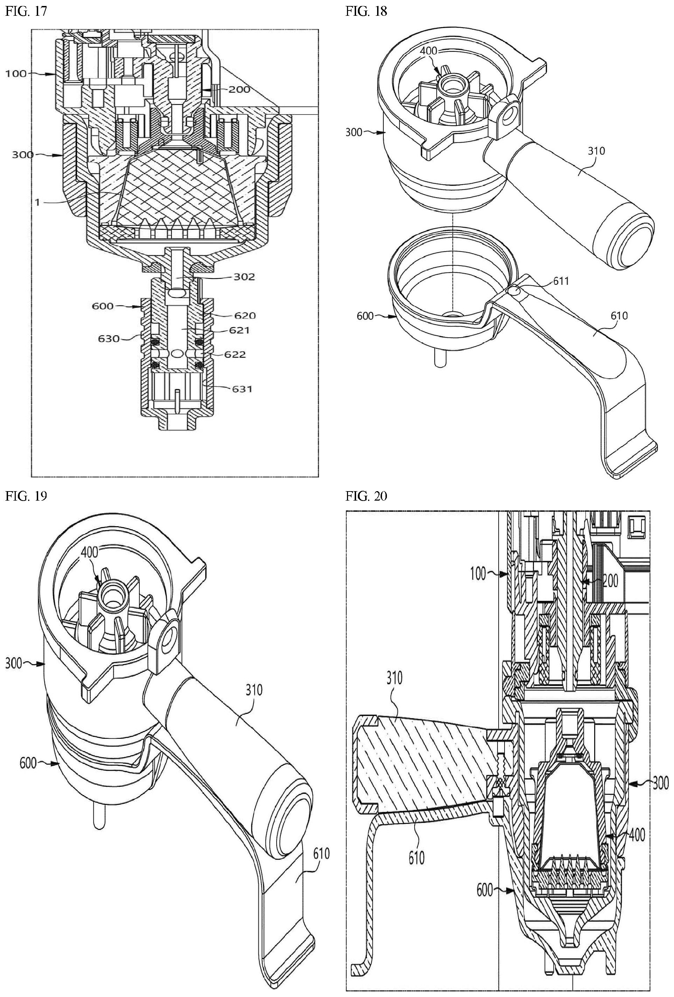

As illustrated in FIGS. 16 and 17, the residual water prevention portion (600) may be formed as a structure having a flow path through which residual water flows and capable of blocking the flow path. For example, the residual water prevention portion (600) may include a fixed pipe (620) coupled to the bottom surface of the capsule holder (300), and a movable pipe (630) coupled to an outer circumferential surface of the fixed pipe (620) and moved upward and downward.

In this case, a vertical flow path (621) through which a beverage or residual water discharged through the discharge port (302) of the capsule holder (300) vertically flows, and a horizontal flow path (622) communicating with one portion of the vertical flow path (621) so as to flow in a horizontal direction may be formed inside the fixed pipe (620). An expanded groove (631), which is expanded more than other portions so that the beverage is discharged from the horizontal flow path (622) by vertical movement of the movable pipe (630), may be formed in an inner circumferential surface of the movable pipe (630), and a lower portion thereof may be open.

That is, when the beverage is allowed to flow as illustrated in FIG. 16, the movable pipe (630) may be moved upward so that the horizontal flow path (622) of the fixed pipe (620) communicates with the expanded groove (631) of the movable pipe (630). On the other hand, when beverage extraction is completed as illustrated in FIG. 17, the movable pipe (630) may be moved downward so that the horizontal flow path (622) of the fixed pipe (620) is blocked by a portion of the movable pipe (630) other than the expanded groove (631). Accordingly, leakage of residual water may be prevented.

In addition, as illustrated in FIGS. 18 to 20, the residual water prevention portion (600) may be formed as a cup structure surrounding the bottom surface of the capsule holder (300). For example, the residual water prevention portion (600) may be formed as a structure that is detachable from the bottom surface of the capsule holder (300) and has a storage space between the residual water prevention portion (600) and the bottom surface of the capsule holder (300).

In this case, a handle (610) may be additionally formed on the residual water prevention portion (600) so that the residual water prevention portion (600) can be easily attached to and detached from the capsule holder (300). In this case, the handle may be formed to extend along a bottom surface of the handle (310) extending from the capsule holder (300).

In addition, the handle (610) may be provided with a magnetic member (611) so that the handle (610) can be simply separated while being prevented from being undesirably separated from the capsule holder (300). That is, one portion of the handle (610) may be attached to one portion of the capsule holder (300) by the magnetic member (611).

As still another example, the capsule holder assembly of the present disclosure may further include a storage case (700).

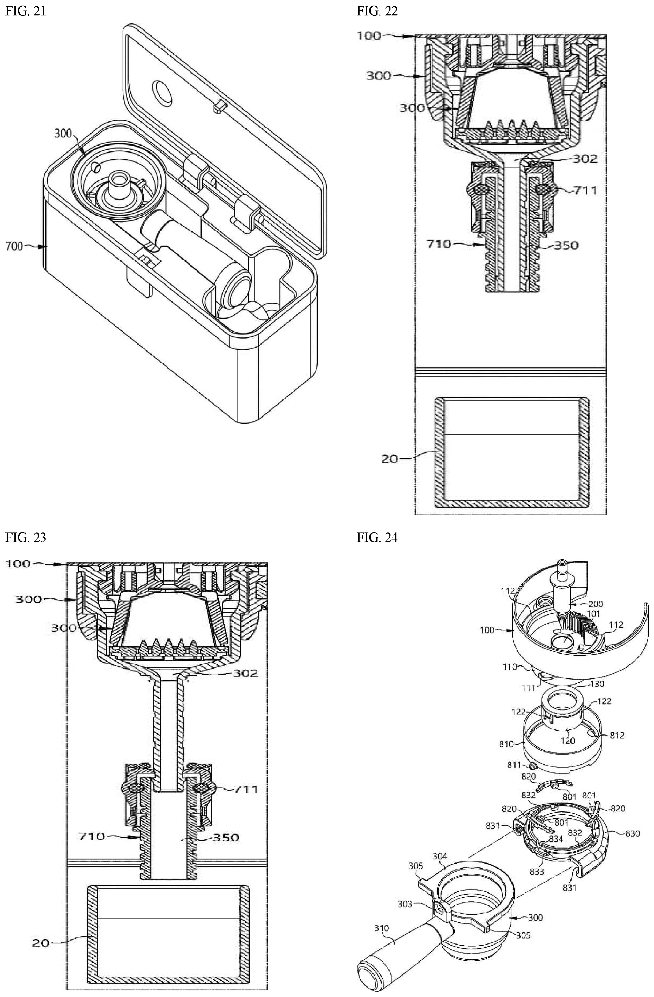

As illustrated in FIG. 21, the storage case (700) may be a box for storing the capsule holder (300).

The storage case (700) may be formed to be stored in one portion of a home appliance. For example, although not shown, in the case of a refrigerator, the storage case (700) may be stored on a bottom surface in the dispenser portion (10), and the capsule holder (300) or the capsule (1) may be stored in the storage case (700).

As still another example, the capsule holder assembly of the present disclosure may further include an extension pipe (710).

The extension pipe (710) may be a structure for preventing a beverage (or drinking water) discharged from the discharge port (302) of the capsule holder (300) from splashing due to a large distance between the discharge port (302) and a cup (20) while the beverage or drinking water falls into the cup (20).

That is, the extension pipe (710) may be selectively extended according to a type of the cup (20) (a type of the cup according to height), thereby preventing splashing of a beverage.

As illustrated in FIGS. 22 and 23, the extension pipe (710) may be installed on an outlet pipe (350), which extends from the discharge port (302) formed in the bottom surface of the capsule holder (300), so as to be vertically movable.

In particular, the extension pipe (710) may be configured to be moved upward and downward while being selectively released from restraint with the outlet pipe (350) by using an operation portion (711).

Meanwhile, the holder assembly of the present disclosure may be modified in structure so that coupling between the capsule holder (300) and the holder mounting portion (100) can be performed more simply and easily.

That is, in the above-described embodiment of the holder assembly of the present disclosure, the capsule holder (300) is required to be operated to be moved upward and rotated in a state in which the capsule holder (300) is positioned below the protruding coupling portion (110) of the holder mounting portion (100). However, when the capsule holder (300) does not maintain an accurate horizontal state and is tilted forward and rearward or leftward and rightward during this operation process, it may be difficult for the guide protrusion (301) of the capsule holder (300) to be accurately coupled to the elevating groove (111) of the protruding coupling portion (110).

In consideration of this, in another embodiment of the capsule holder assembly of the present disclosure, the coupling protrusion (410) of the gripping cap (400) provided in the capsule holder (300) and the dispensing nozzle (200) may be accurately vertically aligned with each other by an operation of moving the capsule holder (300) forward and rearward.

This will be described in more detail for each component with reference to FIGS. 24 to 30 as follows.

First, the capsule holder assembly according to another embodiment of the present disclosure may include the holder mounting portion (100), the dispensing nozzle (200), the capsule holder (300), and the gripping cap (400).

Basic structures of the holder mounting portion (100), the dispensing nozzle (200), the capsule holder (300), and the gripping cap (400) are the same as those of the capsule holder assembly according to the above-described embodiment of the present disclosure.

The capsule holder assembly according to another embodiment of the present disclosure is different from the capsule holder assembly according to the embodiment of the present disclosure in that an elevating guide (810) is rotated by a rotational operation of the capsule holder (300) and is moved vertically with respect to the protruding coupling portion (110).

That is, the capsule holder assembly according to another embodiment of the present disclosure may further include the elevating guide (810) coupled to the protruding coupling portion (110) of the holder mounting portion (100), and the capsule holder (300) may be configured to rotate the elevating guide (810).

Here, the elevating guide (810) may be coupled to the protruding coupling portion (110) of the holder mounting portion (100) and may be formed to be moved vertically along the protruding coupling portion (110) by a rotational operation in a horizontal direction.

In order to rotate the elevating guide (810), a coupling protrusion (811) may be formed on an outer surface of the elevating guide (810), and a coupling groove (303) into which the coupling protrusion (811) is inserted to be coupled thereto may be formed in the capsule holder (300). Accordingly, the elevating guide (810) may be rotated by an operation of rotating the capsule holder (300) in a state in which the coupling protrusion (811) of the elevating guide (810) is coupled to the coupling groove (303) of the capsule holder (300). In this case, the coupling groove (303) may be formed on an axial-direction side defined by the handle (310) of the capsule holder (300). Accordingly, a user may easily couple the coupling protrusion (811) to the coupling groove (303).

In addition, the elevating guide (810) may be installed on the holder mounting portion (100) so as to be rotatable and vertically movable. That is, the elevating guide (810) may be provided with a guide protrusion (801) moved along the elevating groove (111) formed in the outer surface of the protruding coupling portion (110) of the holder mounting portion (100), so that the elevating guide (810) may be moved vertically by the rotational operation.

The guide protrusion (801) may be formed to protrude from a guide member (820) provided separately from the elevating guide (810), and the guide member (820) may be coupled to a portion of the elevating guide (810). Accordingly, by the rotational operation of the elevating guide (810), the guide protrusion (801) may be moved along the elevating groove (111), thereby rotating and moving the elevating guide (810) vertically.

In particular, the elevating groove (111) may be formed such that a lower end thereof does not reach the bottom surface of the protruding coupling portion (110). That is, the elevating groove (111) may not be open to the bottom surface of the protruding coupling portion (110), and thus the guide protrusion (801) may be prevented from being separated from the elevating groove (111).

In addition, the capsule holder assembly according to another embodiment of the present disclosure may further include a fixed guide (830) for preventing tilting of the capsule holder (300). In this case, an outwardly bent extended rim (304) may be formed along a periphery of an upper end of the capsule holder (300), and a guide groove (831) for guiding the extended rim (304) of the capsule holder (300) to be accommodated in a front-rear direction may be formed at opposite side portions of the fixed guide (830). The guide groove (831) may be formed by bending a periphery of an end of the fixed guide (830) in multiple steps.

That is, as the extended rim (304) can be coupled to the guide grooves (831) in a drawer-like manner, the coupling protrusion (811) of the elevating guide (810) may be easily and accurately engaged with the coupling groove (303) of the capsule holder (300), and tilting of the capsule holder (300) may be prevented.

The fixed guide (830) may be coupled to the lower end of the elevating guide (810). The upper end of the fixed guide (830) and the lower end of the elevating guide (810) may be screw-coupled to each other. That is, a spiral protrusion (832) may be formed on an outer circumferential surface of the upper end of the fixed guide (830), and a spiral groove (812) may be formed in an inner circumferential surface of the lower end of the elevating guide (810), so that the fixed guide (830) and the elevating guide (810) may be screw-coupled to each other.

In this case, an insertion groove (833) into which a portion of the guide member (820) is inserted and coupled may be formed at the upper end of the fixed guide (830), and a passage groove (834) through which the guide protrusion (801) protruding from the guide member (820) passes may be formed in the upper surface of the fixed guide (830). With this structure, even when the opposite ends of the elevating groove (111) formed in the protruding coupling portion (110) are not open, the guide protrusion (801) may be inserted into the elevating groove (111).

Meanwhile, stopper steps (305) for preventing excessive insertion of the extended rim (304) into the guide grooves (831) of the fixed guide (830) may be formed at the opposite ends of the extended rim (304) formed on the capsule holder (300). Each of the stopper steps (305) may be formed to have a width or height greater than that of each of the guide grooves (831). Accordingly, the capsule holder (300) may be prevented from being coupled to the fixed guide (830) in a state in which the capsule holder (300) is rotated to one side.

Meanwhile, the capsule holder (300) of the capsule holder assembly of the present disclosure may be configured to correspond to various types of capsules (1). That is, when an internal size of the capsule holder (300) is the same, there is a disadvantage in that the capsule holder (300) cannot correspond to various capsules (1) of many capsule manufacturers and can extract only one type of capsule beverage. In consideration of this, the capsule holder (300) may be preferably provided in various forms according to types of the capsule (1).

In particular, the capsule holder (300) may be configured such that the handle (310) and a portion connected thereto are commonly used, and only a portion in which the capsule (1) is accommodated is replaced and used.

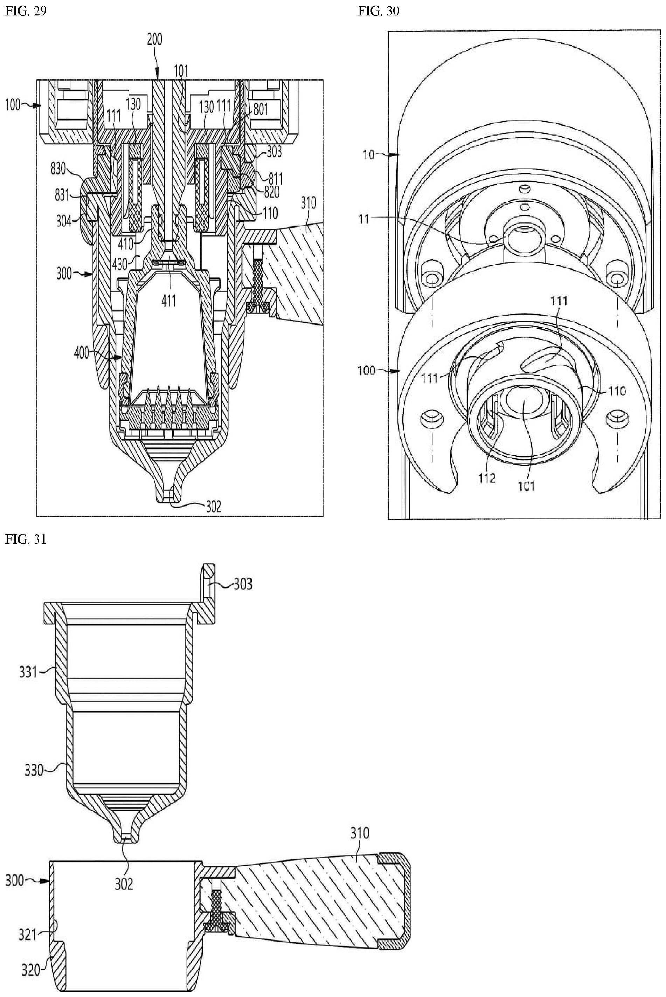

To this end, the capsule holder (300) may include the handle (310), a cylindrical holder body (320), and an accommodation cup (330) in which the capsule (1) is accommodated. This is illustrated in FIG. 31.

Here, the handle (310) and the holder body (320) may be commonly used, and the accommodation cup (330) may be formed to be inserted into and installed in the holder body (320). That is, only the accommodation cup (330) may be detached from the holder body (320) and replaced according to a type of the capsule (1) from which a beverage is to be extracted.

In this case, it may be preferable that a plurality of recessed grooves (321) having open upper surfaces be formed in the inner circumferential surface of the cylindrical holder body (320), and protruding portions (331) inserted into the recessed grooves (321) be formed on the outer circumferential surface of the accommodation cup (330) so that the recessed grooves (321) and the protruding portions (331) can be engaged with each other. Accordingly, when the holder body (320) is rotated, the accommodation cup (330) may also be rotated.

As described above, the refrigerator of the present disclosure may be implemented in various forms.

As described above, although all the components constituting the embodiment according to the present disclosure have been described as being combined into a single unit or operating in combination, the present disclosure is not necessarily limited to such embodiments. That is, within the scope and spirit of the present disclosure, all the components may operate by being selectively combined into one or more units. In addition, the terms "include," "comprise," or "have," as used herein, unless otherwise specifically stated, imply that the relevant component may be present, and therefore should be construed to include other components rather than to exclude other components. All terms, including technical or scientific terms, unless otherwise defined, have the same meaning as commonly understood by those skilled in the art to which the present disclosure belongs. Commonly used terms, such as terms defined in the dictionary, should be interpreted to be consistent with their contextual meanings in the relevant technology and should not be interpreted in an idealized or overly formal sense unless expressly defined in the present disclosure.

The foregoing description is merely illustrative of the technical idea of the present disclosure, and it will be understood by those skilled in the art that various modifications and variations may be made without departing from the essential characteristics of the present disclosure. Accordingly, the embodiments disclosed herein are not intended to limit the technical idea of the present disclosure, but rather to explain it, and the scope of the technical idea of the present disclosure is not limited by such embodiments. The scope of protection of the present disclosure shall be interpreted on the basis of the following claims, and all technical ideas falling within the equivalent scope thereof shall be construed as being included within the scope of rights of the present disclosure.

## Claims

1. A capsule holder assembly comprising:
a holder mounting portion fixed around a water outlet of a home appliance, having a through hole vertically penetrating the holder mounting portion, and having a protruding coupling portion formed on a bottom surface thereof to protrude therefrom;
a dispensing nozzle connected to receive drinking water discharged through the water outlet of the home appliance and installed to pass through the through hole of the holder mounting portion;
a capsule holder having an accommodation space in which a capsule is accommodated and having a discharge port formed in a bottom surface thereof; and
a gripping cap installed to surround the capsule positioned in the accommodation space of the capsule holder, having the dispensing nozzle coupled to an upper surface thereof, and configured to grip and perforate the capsule according to vertical movement of the capsule holder.

2. The capsule holder assembly of claim 1, wherein the protruding coupling portion of the holder mounting portion is formed to have a hollow pipe structure such that a portion of the dispensing nozzle is exposed.

3. The capsule holder assembly of claim 1, wherein a coupling protrusion configured to accommodate an end of the dispensing nozzle is formed on the upper surface of the gripping cap.

4. The capsule holder assembly of claim 1, wherein an elevating groove is formed in an outer circumferential surface of the protruding coupling portion, and
wherein a guide protrusion is formed on the capsule holder, the guide protrusion being inserted into the elevating groove and being moved along the elevating groove by a rotational operation of the capsule holder so that the capsule holder is moved vertically.

5. The capsule holder assembly of claim 4, further comprising:
a handle provided on an outer circumferential surface of the capsule holder,
wherein the guide protrusion is formed at a position on an inner circumferential surface of the capsule holder, the position corresponding to a side in a longitudinal direction of the handle.

6. The capsule holder assembly of claim 4, wherein the elevating groove comprises a plurality of elevating grooves,
wherein the plurality of elevating grooves are respectively formed at positions symmetrical to each other with respect to a central axis of the protruding coupling portion.

7. The capsule holder assembly of claim 6, wherein a lower end of the elevating groove is formed to be open to a bottom surface of the protruding coupling portion.

8. The capsule holder assembly of claim 1, wherein a support on which the capsule is seated is provided in the accommodation space,
wherein an accommodation groove is formed in an upper surface of the support along a periphery of the upper surface, and
wherein an accommodation protrusion received in and engaged with the accommodation groove is formed on a bottom surface of the gripping cap.

9. The capsule holder assembly of claim 8, wherein an airtight member configured to be in airtight contact with the accommodation groove of the support is provided at a lower end of the gripping cap.

10. The capsule holder assembly of claim 9, wherein the airtight member is formed to surround the lower end of the gripping cap and the accommodation protrusion.

11. The capsule holder assembly of claim 1, wherein a pressing member configured to press a periphery of the upper surface of the gripping cap is provided in the protruding coupling portion of the holder mounting portion.

12. The capsule holder assembly of claim 11, wherein an engaging step is formed on an inner circumferential surface of the protruding coupling portion, and
an engaging hook selectively engaged with the engaging step is formed on a circumferential surface of the pressing member.

13. The capsule holder assembly of claim 11, wherein a restoring member configured to push the pressing member downward is provided between the bottom surface of the holder mounting portion and an upper surface of the pressing member.

14. The capsule holder assembly of claim 1, wherein a residual water prevention portion configured to prevent residual water in the discharge port from falling is detachably provided on the bottom surface of the capsule holder.

15. A capsule holder assembly comprising:
a holder mounting portion fixed around a water outlet of a home appliance, having a through hole vertically penetrating the holder mounting portion, and having a protruding coupling portion formed on a bottom surface thereof to protrude therefrom;
a dispensing nozzle connected to receive drinking water discharged through the water outlet of the home appliance and installed to pass through the through hole of the holder mounting portion;
an elevating guide coupled to the protruding coupling portion of the holder mounting portion and configured to be moved vertically along the protruding coupling portion by a rotational operation in a horizontal direction;
a capsule holder having an accommodation space in which a capsule is accommodated, configured to rotate the elevating guide by the rotational operation in the horizontal direction, and having a discharge port formed in a bottom surface thereof; and
a gripping cap installed to surround the capsule positioned in the accommodation space of the capsule holder, having the dispensing nozzle coupled to an upper surface thereof, and configured to grip and perforate the capsule according to vertical movement of the capsule holder.

16. The capsule holder assembly of claim 15, wherein an elevating groove is formed in an outer circumferential surface of the protruding coupling portion, and
the elevating guide is provided with a guide member on which a guide protrusion configured to move along the elevating groove is formed.

17. The capsule holder assembly of claim 16, wherein a lower end of the elevating groove is formed at a position higher than a bottom surface of the protruding coupling portion.

18. The capsule holder assembly of claim 15, wherein a coupling protrusion is formed on an outer surface of the elevating guide, and
a coupling groove is formed in the capsule holder, the coupling protrusion being inserted into and coupled to the coupling groove so that the elevating guide is rotated by rotation of the capsule holder and is moved upward.

19. The capsule holder assembly of claim 15, further comprising:
an extended rim formed to extend from a periphery of an upper end of the capsule holder; and
a fixed guide coupled to a lower end of the elevating guide and having a guide groove in which the extended rim of the capsule holder is accommodated in a front-rear direction so that the capsule holder is coupled to the fixed guide in a drawer-like manner.

20. The capsule holder assembly of claim 19, wherein stopper steps configured to restrict insertion of the extended rim into the guide groove of the fixed guide are respectively formed on opposite ends of the extended rim.
